# EUROPÄISCHE PATENTSCHRIFT

(11) **EP 0 397 984 B1**
(45) Veröffentlichungstag und Bekanntmachung des Hinweises auf die Patenterteilung: **06.10.1993**
(21) Anmeldenummer: 90104894.2
(22) Anmeldetag: 15.03.1990
(51) Int. Cl.: G01P 3/68

(54) **Geschwindigkeitsmesssystem für Strassenfahrzeuge**
Speed measuring system for road vehicles
Système de mesure de la vitesse pour véhicules routier

(30) Priorität: 25.04.1989 DE 3913526
(43) Veröffentlichungstag der Anmeldung: 22.11.1990
(73) Patentinhaber: Fischer, Reinhold, D-88074 Meckenbeuren (DE); Münz, Erwin, D-88069 Tettnang (DE)
(72) Erfinder: Rauch, Lorenz, D-7996 Meckenbeuren (DE); Fischer, Reinhold, D-7996 Meckenbeuren (DE); Münz, Erwin, D-7992 Tettnang (DE)
(74) Vertreter: Patentanwälte Eisele, Otten & Roth

(56) Entgegenhaltungen:
- EP-A- 0 042 546
- US-A- 4 180 726
- RADIO MENTOR ELECTRON., Band 44, Nr. 1, 1978, Seite 019,020, München, DE; "Doppellichtschranke prüft Verkehrsradar"

## Beschreibung

Die Erfindung betrifft ein System zur Messung der Geschwindigkeit von Straßenfahrzeugen mit mehreren in Fahrtrichtung hintereinander in einer gemeinsamen Ebene angeordneten Lichtschranken und einer Auswerteschaltung für die beim Ansprechen der Lichtschranken entstehenden elektrischen Signale.

Derartige Systeme sind schon zu außerordentlich hoher Störungssicherheit entwickelt worden, da mit ihnen u. a. auch gerichtlich verwertbare Beweismittel geschaffen werden sollen. So wurden schon die elektronischen Recheneinheiten samt Taktfrequenzgenerator verdoppelt, um durch Vergleich festzustellen, ob die errechneten Geschwindigkeiten voneinander abweichen, wodurch ein interner Fehler in einem der Verarbeitungskanäle festgestellt werden kann. Andere Maßnahmen dienen zur Ausschaltung von Störungen durch Fremdobjekte. In der EP-A-0 042 546 ist z. B. beschrieben, wie dies durch Anordnung einer dritten Lichtschranke erreicht werden kann.

Die Erfindung will falsche Meßergebnisse mit noch höherer Sicherheit ausschließen. Dabei wird einerseits die Anordnung der Lichtschranken und andererseits die Form der Fahrzeugvorderkanten, welche die Unterbrechung der Lichtstrahlen bewirken, in Betracht gezogen.

Unbemerkte Fehler bei der Zeitmessung können auftreten, wenn zwei Dinge zusammenkommen, nämlich
a) die Ebene der Lichtschranken in Fahrtrichtung gegenüber der Fahrbahn geneigt ist und
b) die strahlunterbrechende Außenkontur des Fahrzeugs, wie sie sich in der Seitenansicht darstellt, die sog. Auslösekante, von ihrem normalerweise zur Fahrbahn etwa senkrechten Verlauf abweicht und ebenfalls in Fahrtrichtung geneigt ist.

Sowohl in Fahrtrichtung ansteigende als auch abfallende Neigungen führen grundsätzlich zu Zeitmeßfehlern. Die gemessene Zeit kann länger oder kürzer sein als bei genau fahrbahnparalleler Lichtschrankenebene und genau lotrechter Auslösekante. Obwohl die Lichtstrahlsende- und -empfangsgeräte nach Herstelleranweisung parallel zur Fahrbahn eingerichtet werden sollen, ist eine gelegentliche, wenn auch geringe Abweichung von der Parallelität zur Fahrbahn nie ganz auszuschließen. Wenn dann noch dazu kommt, daß die Lichtschranken so hoch angeordnet sind, daß die flach nach hinten ansteigende Motorhaube die Auslösekante des gemessenen Fahrzeugs bildet, so kann die gemessene Geschwindigkeit von der tatsächlichen Geschwindigkeit schon erheblich abweichen.

Der Erfindung liegt die Aufgabe zugrunde, durch derartige Konstellationen verursachte Meßfehler zu erkennen und die Messung ggf. als ungültig auszuweisen.

Ausgehend von einem Meßsystem der einleitend bezeichneten Art werden zur Lösung dieser Aufgabe die im Anspruch 1 gekennzeichneten Maßnahmen vorgeschlagen.

Durch das Zusammenwirken einer der Meßlichtschranken mit der in einem Abstand in Fahrtrichtung, aber höher oder tiefer angeordneten Zusatzlichtschranke wird eine Vergleichsmessung mit geneigter Lichtschrankenebene simuliert. Wenn die Auslösekante lotrecht verläuft, ergeben sich zwischen der Vergleichsgeschwindigkeit und der normal gemessenen Geschwindigkeit, bezogen auf die gleiche Entfernungsbasis, kaum Unterschiede. Ist jedoch die Auslösekante geneigt, so ergeben sich sehr deutliche Unterschiede, die wesentlich höher liegen als der durch die unbeabsichtigte Neigung der Meßlichtstrecken-Ebene und die geneigte Auslösekante verursachte Meßfehler. Somit gelingt es, Meßfehler dieser speziellen Kategorie eindeutig und leicht zu erkennen, auch wenn sie größenmäßig noch in der Toleranzgrenze liegen.

Bei einem Geschwindigkeitsmeßsystem mit drei Meßlichtschranken wird als bevorzugte Ausführungsform der Erfindung vorgeschlagen, daß die Zusatzlichtschranke in einem Abstand von etwa 1/5 des Abstandes der Meßlichtschranken unter der mittleren Meßlichtschranke angeordnet ist und die aus den Signalen der ersten Meßlichtschranke und der Zusatzlichtschranke errechnete Geschwindigkeit die Vergleichsgeschwindigkeit bildet. Auf diese Weise läßt sich die Erfindung bei einem bekannten Geschwindigkeitsmeßsystem durch nachträglichen Einbau realisieren. Die Toleranzgrenze, ab der eine Messung gekennzeichnet oder ausgescheiden wird, wird vorzugsweise bei etwa 10 % festgelegt.

Ein Ausführungsbeispiel der Erfindung wird nachfolgend anhand der Zeichnung erläutert. Im einzelnen zeigt
- Fig. 1: eine schematische Seitenansicht einer Lichtschrankenanordnung und die Auslösekante eines Fahrzeugs und
- Fig. 2: ein grob schematisches Blockschaltbild der elektronischen Schaltanordnung des Systems.

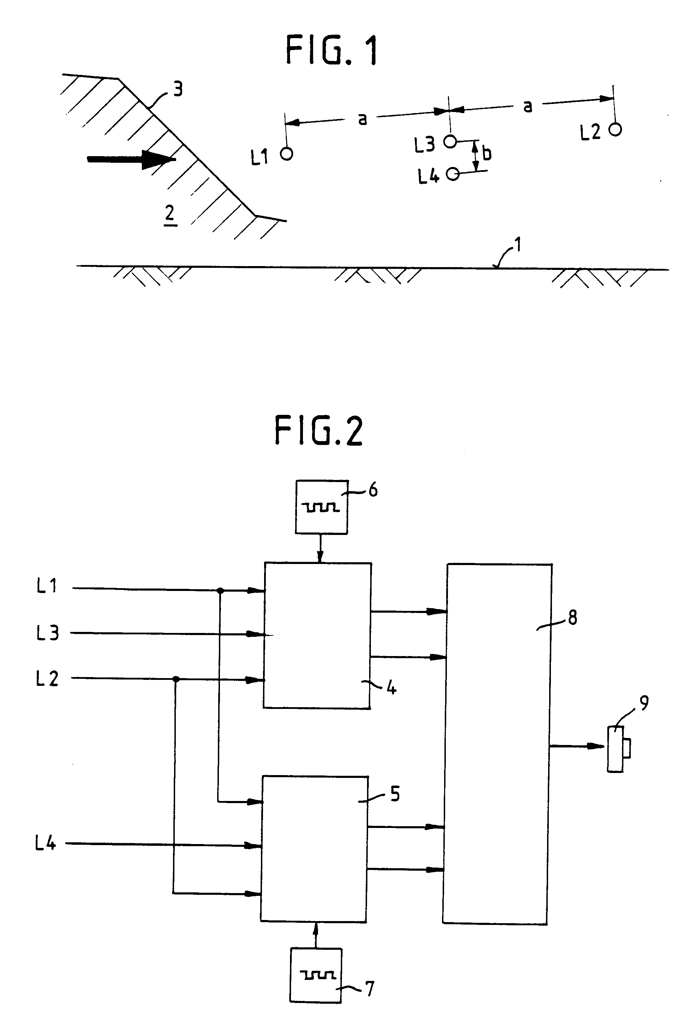

In Fig. 1 sind vier Lichtschranken vom Straßenrand aus betrachtet dargestellt, d. h. in Strahlrichtung. Sie sind schematisch als kleine Kreise wiedergegeben und mit L1, L2, L3 und L4 bezeichnet. Die Meßlichtschranken L1 bis L3 liegen in einer gemeinsamen Ebene und haben die Abstände a = 25 cm. Die Zusatzlichtschranke L4 liegt mit einem Höhenabstand b = 5 cm unter der mittleren Lichtmeßschranke L3. Die Ebene der Meßlichtschranken ist gegenüber der Fahrbahn 1 um etwa 5° geneigt. Links ist ein Fahrzeug 2 angedeutet, dessen mit den Lichtschranken zusammenwirkende Frontpartie im Profil gesehen eine Auslösekante 3 bildet, die um etwa 45° geneigt ist. Die Fahrtrichtung ist durch einen Pfeil angedeutet.

Die tatsächliche Geschwindigkeit des Fahrzeugs 2 würde richtig errechnet werden, wenn die Ebene der Meßlichtschranken L1 bis L3 fahrbahnparallel wäre. Durch die Neigung dieser Meßlichtschrankenebene ergibt sich eine Falschmessung infolge falscher Zeitmessung. Die gemessenen Zeiten liegen um etwa 8,75 % höher als die tatsächlichen Zeiten, die das Fahrzeug 2 braucht, um von L1 nach L3 bzw. L2 zu gelangen. Dieser Fehler würde normalerweise nicht erkannt.

Erfindungsgemäß wird jedoch zusätzlich die aus der Zeitmessung L1-L3 errechnete Geschwindigkeit mit der aus der Zeitmessung L1-L4 errechneten Vergleichsgeschwindigkeit verglichen. Die Differenz dieser Geschwindigkeiten beträgt etwa 17 %. Wenn also die Schwelle auf 10 % eingestellt ist, so wird diese Messung als ungültig gekennzeichnet.

Fig. 2 zeigt zwei parallel angeordnete identische Schaltanordnungen 4 und 5 zur Zeitmessung. Ihnen werden die Schaltsignale der Lichtschranken L1 bis L4 zugeführt und jede Schaltanordnung hat ihren eigenen Taktgenerator 6 bzw. 7. Die Schaltanordnungen enthalten im wesentlichen Zähler und Speicher und geben ihre Ausgangssignale, nämlich die gemessenen Zeiten an einen elektronischen Rechner 8 weiter, der aufgrund der Lichtschrankenabstände a die Geschwindigkeiten errechnet, vergleicht, sofern erforderlich speichert und auch die notwendigen Diskriminatoren enthält, die entscheiden, ob die Meßwerte über oder unterhalb bestimmter Toleranzgrenzen liegen. Sind die Toleranzen alle eingehalten, so erfolgt ein Ausgangssignal an eine Fotografiereinrichtung 9.

Um zunächst einmal interne Meßfehler auszuschalten, werden die Signale der Lichtschranken L1 und L2 beiden Schaltanordnungen 4 und 5 parallel zugeführt. Die Meßwerte werden dann verglichen und nur für ungültig erklärt, wenn die auf den Zeitwert bezogene Differenz eine verhältnismäßig große Toleranzgrenze von 10 % überschreitet. Schaltungsinterne Störungen führen meist zu sehr großen Fehlern. Zur Ausschaltung äußerer Störungseinflüsse dient die mittlere Lichtschranke L3. Es wird so vorgegangen, daß die über den Abstand a von L1 bis L3 gemessene Zeit verdoppelt und daraus eine erste Geschwindigkeit errechnet wird. Gleichzeitig wird aus der Zeitmessung L1-L2 eine zweite Geschwindigkeit errechnet. Die prozentuale Differenz dieser beiden Geschwindigkeiten muß unter der Toleranzgrenze von 3 % bleiben. Insoweit ist die beschriebene Anordnung bekannt.

Nach dem erfindungsgemäßen Vorschlag werden zusätzlich mit Hilfe der Schaltanordnungen 4 und 5 die Zeiten L1-L3 sowie L1-L4 gemessen und daraus Geschwindigkeiten errechnet. Für die prozentuale Differenz dieser Geschwindigkeiten ist eine Toleranzgrenze von 10 % festgelegt. Wird diese überschritten, so kann daraus gefolgert werden, daß jedenfalls die Auslösekante an dem betreffenden Fahrzeug stark geneigt war und somit nicht auszuschließen ist, daß bei einer zusätzlichen Neigung der Meßlichtschranken-Ebene der Geschwindigkeitsmeßwert nicht der wirklich gefahrenen Geschwindigkeit entspricht. Die Messung sollte dann möglichst ausgeschieden oder mit entsprechendem Vorbehalt behandelt werden.

## Patentansprüche

1. System zur Messung der Geschwindigkeit von Straßenfahrzeugen mit mehreren in Fahrtrichtung hintereinander in einer gemeinsamen Ebene angeordneten Meßlichtschranken und einer Auswerteschaltung für die beim Ansprechen der Lichtschranken entstehenden elektrischen Signale, dadurch gekennzeichnet, daß in einem Abstand (b) über oder unter der Ebene der Meßlichtschranken (L1, L3, L2) und parallel zu diesen eine Zusatzlichtschranke (L4) vorgesehen ist, und daß die Auswerteschaltung so ausgebildet ist, daß die aus den Signalen der Meßlichtschranken (L1, L3) errechnete Geschwindigkeit mit der aus den Signalen einer Meßlichtschranke (L1) und der Zusatzlichtschranke (L4) errechneten Vergleichsgeschwindigkeit verglichen wird und das Meßergebnis dann besonders gekennzeichnet oder ausgeschieden wird, wenn die prozentuale Differenz der Geschwindigkeiten über einer bestimmten Toleranzgrenze liegt.

2. System nach Anspruch 1 mit drei Meßlichtschranken, dadurch gekennzeichnet, daß die Zusatzlichtschranke (L4) in einem Abstand von etwa 1/5 des Abstandes (a) der Meßlichtschranken unter der mittleren Meßlichtschranke (L3) angeordnet ist und die aus den Signalen der ersten Meßlichtschranke (L1) und der Zusatzlichtschranke (L4) errechnete Geschwindigkeit die Vergleichsgeschwindigkeit bildet.

3. System nach Anspruch 1, dadurch gekennzeichnet, daß die Toleranzgrenze 10 % beträgt.

## Claims

1. A system for measuring the speed of road-going vehicles, comprising, disposed serially in one common plane and in the direction of travel, a plurality of photoelectrically actuated measuring devices and a circuit for evaluating the electrical signals generated by response from the photoelectrically actuated measuring devices, characterised in that at a distance (b) above or below the plane of the photoelectrically actuated measuring devices (L1, L3, L2) and parallel therewith there is an auxiliary photoelectrically actuated device (L4) and in that the evaluating circuit is so constructed that the speed calculated on a basis of the signals from the photoelectrically actuated devices (L1, L3) is compared with the comparative speed calculated from the signals from a photoelectrically actuated measuring device (L1) and the auxiliary photoelectrically actuated device (L4), the measured result being then particularly identified or discarded if the percentage difference between the speeds is above one specific tolerance limit.

2. A system according to Claim 1 with three photoelectrically actuated measuring devices, characterised in that the auxiliary device (L4) is disposed at a distance below the middle photoelectrically actuated device (L3) which represents about one fifth the distance (a) between the photoelectrically actuated measuring devices, and in that the speed calculated from the signals from the first device (L1) and the auxiliary device (L4) constitute the comparative speed.

3. A system according to Claim 1 characterised in that the tolerance limit amounts to 10%.

## Revendications

1. Système pour mesurer la vitesse de véhicules routiers, comportant plusieurs barrages photoélectriques de mesure agencés l'un derrière l'autre dans un plan commun dans la direction de déplacement, et un circuit d'exploitation pour les signaux électriques créés par sollicitation des barrages photoélectriques,
caractérisé en ce que, à une distance (b) au-dessus ou au-dessous du plan des barrages photoélectriques (L1,L3,L2) et parallèlement à ceux-ci, est prévu un barrage photoélectrique supplémentaire (L4), et en ce que le circuit d'exploitation est réalisé de sorte que la vitesse calculée à partir des signaux des barrages photoélectriques (L1, L3) est comparée à la vitesse de comparaison calculée à partir des signaux d'un barrage photoélectrique (L1) et du barrage photoélectrique supplémentaire (L4) et le résultat de mesure est alors expressément caractérisé ou rejeté lorsque la différence, selon un pourcentage, des vitesses se trouve au-dessus d'une limite de tolérance déterminée.

2. Système selon la revendication 1 comportant trois barrages photoélectriques de mesure,
caractérisé en ce que le barrage photoélectrique supplémentaire (L4) est agencé à une distance d'environ 1/5 de la distance (a) des barrages photoélectriques au-dessous du barrage photoélectrique central (L3) et la vitesse calculée à partir des signaux du premier barrage photoélectrique (L1) et du barrage photoélectrique supplémentaire (L4) forme la vitesse de comparaison.

3. Système selon la revendication 1,
caractérisé en ce que la limite de tolérance vaut 10 %.
